# EUROPEAN PATENT APPLICATION

(11) **EP 1 204 079 A1**
(43) Date of publication of application: **08.05.2002**
(21) Application number: 00830730.8
(22) Date of filing: 03.11.2000
(51) Int. Cl.: G07F 7/10, G07C 9/00, G06K 9/00

(54) **A portable data substrate**

(71) Applicant: STMicroelectronics S.r.l., 20041 Agrate Brianza (Milano) (IT)
(72) Inventor: Pasotti, Marco, 27028 S. Martino Sicc., Pavia (IT); Fumagalli, Luciano, 20065 Inzago, Milano (IT); Rolandi, Pier Luigi, 15059 Monleale, Alessandria (IT)
(74) Representative: Maggioni, Claudio

(57) **Abstract**

A portable data substrate with protection against unauthorized access, comprising: a first non-volatile memory (11) containing protected data, a second non-volatile memory (17) containing identification data of at least one user authorized to have access to the protected data, means (12) for the input of personal data, and processing means (10) connected to the first memory, to the second memory, and to the input means in order to perform a procedure of identification and authorization for access to the protected data by a comparison between the personal data input and the identification data stored. Both the identification data and the personal data comprise data representing a fingerprint and the input means comprises a fingerprint sensor (12) which derives the personal data from a fingerprint of a finger applied to the sensor.

## Description

The present invention relates to a portable data substrate with protection against unauthorized access as defined in the preamble of Claim 1.

Some electronic apparatuses which are coming into common use, such as players of audio recordings in MP3 format and digital cameras, use, as data substrates, non-volatile semiconductor memories packaged in removable cards. In many applications, the data held in the memory should not be made accessible to everyone but only to previously authorized users; a typical application of this type is that which relates to audio-visual products protected by copyright.

A known method of preventing unauthorized use of data held in the memory of a card provides for the following steps: preliminary storage of data identifying the authorized user, including a personal identification code (a PIN) or another secret code (a password), the input of the secret code by the user, by means of suitable input devices, a comparison between the data input and the data stored, performed by a processor contained in the card or in the apparatus which is to use the protected data, and the granting of access if there is a match between the data compared. Although this protection method is effective and widely used, it can be implemented only if the apparatus in which the card will be inserted has a keyboard or similar input device. Moreover, this method requires some diligence by the user who has to memorize the secret code, which is constituted by at least four figures, and has to physically input it into the apparatus by means of the keyboard.

The main object of the present invention is to provide a portable data substrate with protection against unauthorized access which does not require the use of keyboards or of secret codes.

This object is achieved by the provision of the data substrate defined and characterized in general in Claim 1.

The invention will be understood better from the following detailed description of a non-limiting embodiment thereof, given with reference to the appended drawings, in which:
Figure 1 is a block diagram of a portable data substrate according to the invention, and
Figure 2 is a perspective view of a card which incorporates a portable data substrate according to the invention.

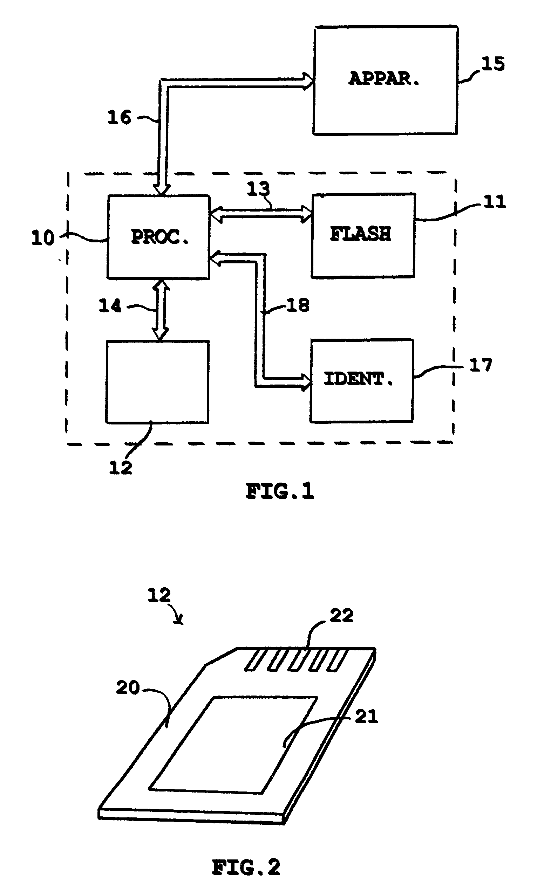

With reference to Figure 1, a processor 10 is connected, by means of a data bus 13, to a non-volatile memory 11 containing the data to be protected and, by means of a data bus 14, to a fingerprint sensor 12. The processor may be an ST7-ST10 device, the memory 11 may be a M58LW064A/B flash memory, and the digital fingerprint sensor a TCS1A device, all produced by STMicroelectronics. The processor 10 is connected, by means of an input/output bus 16, to apparatus 15 which can use the protected data contained in the memory 11. A non-volatile memory 17, connected to the processor 10 by means of a data bus 18, contains identification data of one or more users who are authorized to have access to the protected data. According to the invention, the identification data defines one or more images of the fingerprints of the authorized user or users in digital format. This data is stored during a stage of preparation of the system, preferably with the use of the same sensor 12, and may contain an image of a single finger print or several images relating to different fingers of the same authorized user or relating to fingers of different authorized users.

When a request to read the protected data contained in the memory 11 reaches the data bus 16, the processor 10 checks the access authorization. In particular, the processor sends an activation signal to the sensor 12. If a fingertip is placed on the sensitive surface of the sensor, the image of the fingerprint is detected and transformed into digital format. The digital image thus obtained is compared by the processor 10, by means of a suitable algorithm, with the image or images stored in the memory 17. If it appears from the comparison that the digital print coming from the sensor substantially matches one of the prints stored, the processor allows the protected data to flow from the memory 11 to the apparatus 15 via the input/output bus 16. If such a match is not found, access to the memory 11 is denied.

In the embodiment shown, the processor 10, the protected-data memory 11, the identification-data memory 17 and the sensor 12 are represented as distinct functional blocks. In practice, the processor 10 may be formed in the same semiconductor chip which contains the protected data memory 11 and the two memories 11 and 17 may form part of a single matrix of memory cells. That is to say, it is possible to incorporate the various devices in two chips, one with the memories and the processor and the other with the sensor. Naturally, the possibility of incorporating all of the devices, including the sensor, in a single chip is not excluded. The advantage of one or other construction depends on considerations of an economic nature and/or relating to the availability of the necessary technologies. In any case, as shown in Figure 2, the final product is a substantially rigid plastics body 20 in the form of a card, on the surface of which appear the sensor surface 21 on which the tip of a finger is placed and the metal contacts 22 for the electrical connection of the card to the user apparatus 15.

Although only one embodiment of the invention has been described and illustrated, naturally many variations and modifications are possible within the scope of the same inventive concept.

## Claims

1. A portable data substrate with protection against unauthorized access, comprising:
a first non-volatile memory (11) containing protected data,
a second non-volatile memory (17) containing identification data of at least one user authorized to have access to the protected data,
means (12) for the input of personal data, and
processing means (10) connected to the first memory, to the second memory, and to the input means in order to perform a procedure of identification and authorization for access to the protected data by a comparison between the personal data input and the identification data stored,
**characterized in that** both the identification data and the personal data comprise data representing at least one fingerprint and the input means comprise a fingerprint sensor (12) which derives the personal data from at least one fingerprint of the tip of at least one finger applied to the sensor.

2. A portable data substrate according to Claim 1 in which the processing means (10) and the first memory (11) are formed in the same chip of semiconductor material.

3. A portable data substrate according to Claim 1 or Claim 2 in which the first memory (11) and the second memory (17) are contained in a single matrix of memory cells.

4. A portable data substrate according to any one of the preceding claims, comprising a substantially rigid plastics body (20) which incorporates the first memory (11), the second memory (17), the processing means (10) and the fingerprint sensor (12) and which has metal contacts (22) for connection to apparatus (15) for using the protected data.
